Europäisches Patentamt

(19) European Patent Office

Office européen des brevets

(11) Numéro de publication: **0 005 384**
**B1**

(12) **FASCICULE DE BREVET EUROPEEN**

(45) Date de publication du fascicule de brevet: **16.09.81**

(51) Int. Cl.³: **E 21 B 4/14, E 21 B 17/04**

(21) Numéro de dépôt: **79400148.7**

(22) Date de dépôt: **07.03.79**

(54) **Marteau pneumatique fond-de-trou comportant un taillant.**

(30) Priorité: **24.04.78 FR 7812012**

(43) Date de publication de la demande:
**14.11.79 Bulletin 79/23**

(45) Mention de la délivrance du brevet:
**16.09.81 Bulletin 81/37**

(84) Etats Contractants Désignés:
**DE GB IT SE**

(56) Documents cités:
**FR - A - 2 063 801**
**FR - A - 2 200 434**
**FR - A - 2 274 780**
**FR - A - 2 306 365**
**US - A - 2 756 966**
**US - A - 3 866 746**

(73) Titulaire: **STENUICK FRERES S.A.**
**100 avenue des Déportés**
**B-6140 Fontaine l'Evêque (BE)**

(72) Inventeur: **Stenuick, Pierre**
**32 rue du Parc**
**B-6140 Fontaine l'Evêque (BE)**

(74) Mandataire: **Dupuy, Louis et al,**
**CREUSOT-LOIRE 15 rue Pasquier**
**F-75383 Paris Cedex 8 (FR)**

Courier Press, Leamington Spa, England.

Marteau. pneumatique fond-de-trou comportant un taillant

La présente invention concerne un marteau pneumatique fond-de-trou comportant des canaux de distribution d'air comprimé destinés à commander le mouvement d'un frappeur agissant à l'extrémite d'un taillant.

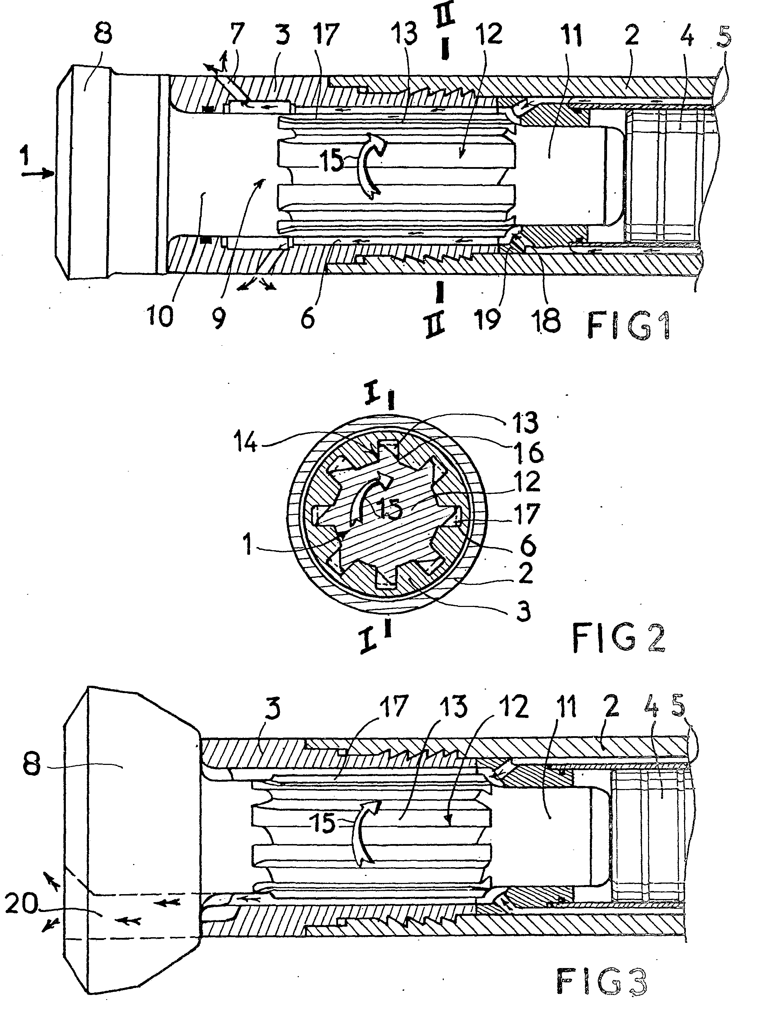

Le guidage d'un taillant de perforation dans l'avant-cylindre d'un marteau pneumatique est habituellement réalisé par des cannelures intérieures à l'avant-cylindre dans lesquelles est engagé le taillant muni d'une queue de plus faible section et pourvu de dents correspondantes. Afin de diminuer l'usure des cannelures et des dents, les foreurs réalisent fréquemment des dents dissymétriques, chacune des dents ayant le flanc d'usure qui est en contact avec le marteau pendant le forage, supérieur à l'autre flanc. Un marteau de ce type est déjà connu par le brevet français 2.063.801 (figures 1 à 5). Il est aussi mentionné à la page 2 de ce document que l'on peut fabriquer les cannelures sus-mentionnées avec une section droite rectangulaire. Le brevet américain n° 2.756.966 décrit aussi un dispositif de forage comportant des dents 39 dissymétriques dont le flanc d'usure qui est en contact avec le marteau pendant le forage est supérieur à l'autre flanc (voir figures 7 d et 12). Dans ces dispositifs connus, les canaux de distribution d'air comprimé destinés à commander le mouvement du frappeur sont percés dans le marteau et dans le taillant (sur la figure 7d du brevet américain n° 2.756.966, le petit canal reliant la cannelure 38 avec l'extérieur n'est pas un canal d'échappement d'air comprimé mais un simple évent permettant d'éviter des phénomènes de compression et de dépression dans la cannelure 38 lors des mouvements de la dent 39 dans cette cannelure).

La présence de ces canaux de distribution d'air comprimé dans le marteau et le taillant demande que l'extrémité du marteau et la queue du taillant aient un assez gros diamètre et nécessite que soit effectué par les constructeurs un travail de percement qui n'est pas négligeable.

L'invention se propose de remédier au problème précité.

Le but de la présente invention est de simplifier la construction des marteaux pneumatiques fond-de-trou, en supprimant le percement, à l'extrémité du marteau et dans le taillant, des canaux spéciaux habituellement prévus pour l'échappement de l'air comprimé.

Plus précisement, l'invention concerne, en partant du brevet français n° 2.063.801 (figures 1 à 5), un marteau pneumatique fond-de-trou comportant des canaux de distribution d'air comprimé destinés à commander le mouvement d'un frappeur agissant à l'extrémité d'un taillant et muni à son extrémité d'un avant-cylindre muni de cannelures intérieures destiné à recevoir ledit taillant, ledit taillant étant constitué par une tête portant des outils de perforation proprement dits et prolongée par une queue de section plus faible comportant des dents dissymétriques qui viennent s'engager dans les cannelures dudit avant-cylindre, chacune des dents ayant le flanc d'usure qui est en contact avec l'avant-cylindre pendant le forage, supérieur à l'autre flanc.

Selon l'invention, le problème sus-mentionné est résolu par le fait que les cannelures intérieures de l'avant-cyclindre sont, de manière connue en soi, de section droite rectangulaire et que les dents ont chacune une section droite sensiblement égale à la moitié du rectangle constituant la section droite de la cannelure correspondante, un canal étant ainsi constitué à l'intérieur de chaque cannelure, la section de ce canal, environ égale à la moitié de la section de la cannelure, étant suffisamment importante pour permettre d'utiliser ce canal pour l'échappement de l'air comprimé.

Dans un mode préféré de réalisation de l'invention, à la sortie des canaux formés entre les dents et les cannelures, l'air comprimé est dirigé vers le fond du trou au moyen d'autres canaux percés dans l'avant-cylindre du marteau.

L'invention va maintenant être décrite avec plus de détails, en se référant à deux modes de réalisation particuliers donnés à titre d'exemples et représentés par les dessins annexés.

La figure 1 est une coupe axiale longitudinale partielle suivant I—I, figure 2, d'un marteau pneumatique pourvu d'un taillant de perforation suivant l'invention.

La figure 2 est une coupe transversale suivant II—II, figure 1.

Sur la figure 3 on a représenté de la même façon que sur la figure 1 une variante de réalisation de l'invention.

Les figures 1 et 2 représentent un taillant 1 engagé à l'extrémité d'un marteau. Ce marteau est constitué d'une tige 2 à l'extrémite de laquelle est vissé un avant-cyclindre 3. L'intérieur de la tige 2 comporte un mécanisme de distribution d'air comprimé destiné à commander le mouvement d'un frappeur 4 agissant à l'extrémité du taillant 1. Le frappeur 4 coulisse dans une chemise 5 intérieure à la tige 2.

Sur une partie de sa longueur, l'intérieur de l'avant-cylindre 3 est pourvu de cannelures 6. Ces cannelures sont de section droite rectangulaire. L'avant-cylindre 3 est également percé d'orifices 7 qui serviront à l'échappement de l'air comprimé du marteau.

Le taillant 1 est constitué par une tête 8 portant des outils de perforation proprement dits, non représentés, et part une queue de section plus faible 9. La queue 9 comporte trois parties. Deux de ces parties sont cylindriques, la partie 10 étant située vers la tête du taillant et la partie 11 étant située à l'extrémité de la queue du taillant. La partie intermédiaire 12 est cannelée. Elle comporte des dents 13 dissymétriques. Chaque dent 13 comporte un flanc 14 qui est en contact avec le marteau pendant le forage (la flèche 15 représente le sens de rotation de l'ensemble marteau-taillant). La hauteur du flanc 14 est supérieure à l'autre flanc 16 de la dent 13. En effet, ce flanc 16 qui n'est pas en contact avec l'avant-cylindre 3 pendant le forage, ne constitue pas une surface d'entrainement du taillant 1 par le marteau; sa hauteur n'a donc pas besoin d'être importante. On a représenté en traits pointillés sur la figure 2, le contour qu'aurait une dent symétrique.

Les dents 13 déterminent avec les cannelures correspondantes 6 du marteau des canaux 17. Ces canaux 17 permettent à l'air comprimé de s'échapper pendant le forage. L'air comprimé suit ainsi le trajet suivant: il passe entre la tige 2 et la chemise 5, puis dans le canal 18 percé dans l'entretoise 19, puis dans les canaux d'échappement 17, et enfin dans les orifices 7 qui le dirigent vers le fond du trou.

Sur la figure 3, le trajet suivi par l'air comprimé est un peu différent de celui que l'on vient de décrire. En effet, à la sortie des canaux 17, l'air ne s'échappe pas par des orifices percés dans l'avant-cylindre mais par des canaux d'échappement 20 percés dans la tête 8 du taillant. Ces trous sont longitudinaux et dirigent l'air vers le fond du trou.

Le taillant selon l'invention présente le gros avantage constitué par le fait que l'air comprimé peut s'échapper par les canaux déterminés entre les dents du taillant et les cannelures du marteau, la section de ces canaux étant suffisamment importante pour permettre cet échappement. On rend ainsi beaucoup plus aisée la fabrication de l'avant-cylindre du marteau. En effet, dans le dispositif de l'invention, on n'est pas oblige de percer des trous spéciaux pour l'échappement de l'air comme on est obligé de le faire dans les marteaux classiques. En fait, en effectuant des cannelures à l'intérieur de l'avant-cylindre, on réalise à la fois le dispositif d'emmanchement et de guidage du taillant et les canaux d'échappement de l'air comprimé. La fabrication d'un tel avant-cylindre est donc simple.

**Revendications**

1. Marteau pneumatique fond-de-trou comportant des canaux de distribution d'air comprimé destinés à commander le mouvement d'un frappeur (4) agissant à l'extrémité d'un taillant (1) et muni à son extrémité d'un avant-cylindre (1) muni de cannelures intérieures (6), destiné à recevoir ledit taillant (1), ledit taillant (1) étant constitué par une tête portant des outils de perforation proprement dits et prolongée par une queue de section plus faible comportant des dents dissymétriques (13) qui viennent s'engager dans les cannelures dudit avant-cyclindre (3), chacune des dents (13) ayant le flanc d'usure (14) qui est en contact avec l'avant-cylindre (3) pendant le forage supérieur à l'autre flanc (16), caractérisé par le fait que les cannelures intérieures (6) de l'avant-cylindre (3) sont, de manière connue en soi, de section droite rectangulaire et que les dents (13) ont chacune une section droite sensiblement égale à la moitié du rectangle constituant la section droite de la cannelure (6) correspondante, un canal (17) étant ainsi constitué à l'intérieur de chaque cannelure (6), la section de ce canal (17), environ égale à la moitié de la section de la cannelure (6), étant suffisamment importante pour permettre d'utiliser ce canal (17) pour l'échappement de l'air comprimé du marteau.

2. Marteau selon la revendication 1, caractérisé par le fait que des canaux (7) sont percés dans l'avant-cylindre (3) du marteau, à la sortie des canaux (17) formés entre les dents (13) et les cannelures (6) pour diriger l'air comprimé vers le fond du trou.

**Claims**

1. Down-hole pneumatic hammer comprising channels for the distribution of compressed air intended to control the movement of a striker acting at the end of a drill bit (1) and provided at its end with a front cylinder (3) having interior grooves (6), intended to receive said drill bit (1), said drill bit consisting of a head supporting so called perforation tools and extended by a handle of smaller cross-section comprising asymmetric teeth (13) which interlock in the grooves of said front cyclinder (3), each of the teeth having its wearing side (14) which is in contact with the front cylinder (3) during drilling above the other side (16), characterised by the fact that the interior grooves (6) of the front cylinder (3) are, in a known manner, of rectangular cross-section and the teeth (13) each have a cross-section substantially equal to half of the rectangle forming the cross-section of the corresponding groove (6), the cross-section of this channel (17), approximately equal to half of the cross-section of the groove (6), being sufficiently large for this channel (17) to be used to allow the compressed air to escape from the hammer.

2. Hammer according to Claim 1, characterised by the fact that channels (7) are bored into the front cylinder (3) of the hammer, at the exit of the channels (17) formed between the teeth (13) and the grooves (6) in order to direct the compressed air towards the bottom of the hole.

**Patentansprüche**

1. Bohrloch-Drucklufthammer mit Druckluftverteilungskanälen, die zur Steuerung der Bewegung eines Schlägers (4) bestimmt sind, der am Ende einer Schneide (1) wirkt und an seinem Ende mit einem Vorzylinder (3) mit inneren Rillen (6) versehen ist, der zur Aufnahme dieser Schneide (1) bestimmt ist, wobei diese Schneide (1) aus einem die eigentlichen Lockwerkzeuge aufnehmenden Kopf besteht, der durch ein Endstück mit kleinerem Querschnitt verlängert wird, das unsymmetrische Zähne (13) aufweist, die in die Rillen des genannten Vorzylinders (3) eingreifen, wobei jeder dieser Zähne (13) eine während des Bohrens mit dem Vorzylinder (3) in Berührung kommende Verschleissflanke (14) aufweist, die höher als die andere Flanke (16) ist, dadurch gekennzeichnet, dass die inneren Rillen (6) des Vorzylinders (3) auf an sich bekannte Weise einen rechteckigen Querschnitt aufweisen und dass die Zähne (13) jeweils einen Querschnitt aufweisen, der ziemlich der Hälfte des Rechtecks entspricht, das den Querschnitt der entsprechenden Rille (6) bildet, wobei so innerhalb jeder Rille (6) ein Kanal (17) gebildet wird und der ungefähr der Hälfte des Querschnitts der Rille (6) entsprechende Querschnitt dieses Kanals (17) ausreicht, um diesen Kanal (17) zum Abführen der Hammerdruckluft zu verwenden.

2. Hammer nach Anspruch 1, dadurch gekennzeichnet, dass Kanäle (7) im Vorzylinder (3) des Hammers am Austritt der zwischen den Zähnen (13) und den Rillen (6) gebildeten Kanäle gebohrt sind, um die Druckluft in das Bohrloch zu leiten.

FIG1

FIG 2

FIG3